# EUROPÄISCHE PATENTSCHRIFT

(11) **EP 3 103 714 B1**
(45) Veröffentlichungstag und Bekanntmachung des Hinweises auf die Patenterteilung: **15.08.2018**
(21) Anmeldenummer: 16001254.8
(22) Anmeldetag: 03.06.2016
(51) Int. Cl.: B62M 9/10, B62M 9/121

(54) **HINTERRAD-RITZELANORDNUNG FÜR EIN FAHRRAD, INSBESONDERE EIN PEDELEC**
REAR WHEEL PINION ASSEMBLY FOR A BICYCLE, IN PARTICULAR A MOTORIZED BICYCLE
SYSTEME DE PIGNON DE ROUE ARRIERE POUR VELO, EN PARTICULIER UN PEDELEC

(30) Priorität: 09.06.2015 DE 102015210503
(43) Veröffentlichungstag der Anmeldung: 14.12.2016
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- DE-A1- 3 810 974
- US-A1- 2001 041 641
- US-A1- 2015 080 160

## Beschreibung

Die vorliegende Erfindung betrifft eine Hinterrad-Ritzelanordnung für ein Fahrrad, eine Antriebsbaugruppe für ein Fahrrad mit einer solchen Hinterrad-Ritzelanordnung sowie ein Fahrrad mit einer solchen Hinterrad-Ritzelanordnung oder/und mit einer solchen Antriebsbaugruppe.

Als ein Stand der Technik wird die US 3 748 916 A von Morse angesehen. Diese offenbart eine Hinterrad-Ritzelanordnung mit einem außergewöhnlich großen Gangbereich von 500 %, der durch insgesamt fünf koaxial angeordnete Ritzel bereitgestellt wird, nämlich mit den Zähnezahlen 9, 14, 20, 30 und 45. Der Gangbereich wird in der englischsprachigen Literatur auch als "gear range", "gear ratio range" oder im Hinblick auf die damit bewirkte Drehmomentübertragung als "torque range" oder "torque ratio range", also als "Drehmomentbereich", bezeichnet. Der Gangbereich ist das Verhältnis der Zähnezahl des größten Ritzels zu jener des kleinsten Ritzels.

Die einzelnen prozentualen Gangstufenschritte sind bei dieser bekannten Hinterrad-Ritzelanordnung sehr groß, was zu deutlich wahrnehmbaren Belastungssprüngen für den die Ritzelanordnung benutzenden Fahrradfahrer führt. Als "einzelner prozentualer Gangstufenschritt" wird in der vorliegenden Anmeldung die Differenz der Zähnezahlen von axial unmittelbar benachbarten Ritzeln, geteilt durch die Zähnezahl des kleineren der benachbarten Ritzel, verstanden. Die einzelnen prozentualen Gangstufenschritte der aus der US 3 748 916 A bekannten Ritzelanordnung - dies sind insgesamt vier Gangstufenschritte bei fünf Ritzeln - betragen demnach vom kleinsten zum größten Ritzel hin 55,6 %, 42,9 %, 50 % und 50 %. Im arithmetischen Mittel, also die Gesamtsumme aus den einzelnen prozentualen Gangstufenschritten geteilt durch die Anzahl an vorhandenen Gangstufenschritten, beträgt der so berechnete durchschnittliche prozentuale Gangstufenschritt 49,6 %, also nur geringfügig weniger als 50 %.

Weiter sind Hinterrad-Ritzelanordnungen aus dem Stand der Technik bekannt, die eine größere Anzahl an Ritzeln und damit verbunden einen kleineren durchschnittlichen prozentualen Gangstufenschritt aufweisen, insbesondere weil diese bekannten Hinterrad-Ritzelanordnungen trotz ihrer größeren Anzahl an Ritzeln einen erheblich kleineren Gangbereich aufweisen. Dokument US 2015/0080160 A1 wird als der nächste Stand der Technik angesehen und offenbart eine Hinterrad-Ritzelanordnung für ein Fahrrad, umfassend wenigstens sieben koaxial angeordnete Ritzel mit unterschiedlichen Zähnezahlen, wobei der gesamte Gangbereich der Ritzelanordnung - definiert als das Verhältnis der Zähnezahl des größten Ritzels zur Zähnezahl des kleinsten Ritzels - wenigstens 350 %, vorzugsweise wenigstens 400 %, besonders bevorzugt wenigstens 435 % beträgt. So ist aus der EP 2 048 075 A eine Hinterrad-Ritzelanordnung mit insgesamt neun Ritzeln bekannt, deren Ritzel folgende Zähnezahlen aufweisen: 11, 13, 15, 17, 20, 23, 26, 30, 34. Diese Ritzelanordnung weist somit einen Gangbereich von etwa 309 % mit einem durchschnittlichen prozentualen Gangstufenschritt von 15,2 % auf. Als weiteres Beispiel des Standes der Technik sei auf eine 12-fach-Ritzelanordnung verwiesen, die aus der EP 2 022 712 A bekannt ist. Diese kann beispielsweise Ritzel mit folgenden Zähnezahlen aufweisen: 11, 12, 13, 14, 15, 17, 18, 19, 21, 23, 25 und 27. Diese Ritzelanordnung weist einen Gangbereich von etwa 245,5 % mit einem durchschnittlichen prozentualen Gangstufenschritt von nur 8,5 % auf.

Diese bekannten Hinterrad-Ritzelanordnungen werden modernen Anforderungen an sie nicht mehr in jedem Fall gerecht. Neue Anforderungen an Ritzelanordnungen ergeben sich zum einen aus der Tendenz, die Anzahl an vorderen Kettenblättern am Fahrrad zu verringern, gegebenenfalls sogar nur noch ein einziges Kettenblatt einzusetzen, sowie aus der Tendenz, Fahrräder mit elektrischen Hilfsmotoren auszurüsten. Letztgenannte Fahrräder werden derzeit in der Regel als "Pedelecs" bezeichnet.

Insbesondere aus den technischen und rechtlichen Rahmenbedingungen für den Betrieb von "Pedelecs", deren Antrieb durch Elektromotoren unterstützt ist, ergeben sich Anforderungen an Hinterrad-Ritzelanordnungen betreffend einen großen Gangbereich und eine vergleichsweise moderate Abstufung zwischen den einzelnen Ritzeln, um den Fahrradfahrer beim Gangwechsel durch eventuell anfallende Drehmomentsprünge nicht zu überlasten. Darüber hinaus ist zu beachten, dass elektrische Hilfsmotoren, hier auch als "unterstützende Elektromotoren" bezeichnet, ihr unterstützendes Drehmoment in der Regel nur bis zum Erreichen einer vorbestimmten Fahrradgeschwindigkeit oder eines vorbestimmten Fahrradgeschwindigkeitsbereichs abgeben dürfen. Bei höheren Geschwindigkeiten ist der Fahrradfahrer dagegen allein auf seine Muskelkraft angewiesen.

Bei den sogenannten "Pedelecs" treten nicht nur wesentlich höhere auf die Hinterrad-Ritzelanordnung wirkende Dauer- und Spitzenlasten auf als bei allein durch Muskelkraft betriebenen Fahrrädern. Durch die aufgrund des unterstützenden Motordrehmoments verfügbare höhere Leistung ändert sich auch das Schaltverhalten am Fahrrad. Während bei herkömmlichen, lediglich durch Muskelkraft angetriebenen Fahrrädern in der Regel nicht unter Last oder lediglich unter geringer Last von einem Ritzel der Ritzelanordnung auf ein axial benachbartes geschaltet wird, wird bei elektromotorisch unterstützten Fahrrädern häufig unter voller Motorlast geschaltet, insbesondere von einem Ritzel auf das nächstkleinere Ritzel, also während eines Beschleunigungsvorgangs. Dabei gilt zu beachten, dass bei modernen "Pedelecs" das vom Elektromotor abgegebene unterstützende Drehmoment ebenso wie die Muskelkraft des Fahrradfahrers über die Hinterrad-Ritzelanordnung auf das Hinterrad des Fahrrads übertragen wird. Aufgrund des bei "Pedelecs" zur Verfügung stehenden hohen Gesamtdrehmoments aus der Kombination des muskelkraftbasierten Drehmoments einerseits und des unterstützenden Drehmoments des Elektromotors andererseits können gerade im niedrigen Geschwindigkeitsbereich - je nach Gesetzgebung ist eine elektromotorische Unterstützung der Muskelkraft des Fahrers bis zu einer Fahrtgeschwindigkeit von zwischen 20 und 30 km/h erlaubt - derart hohe Beschleunigungswerte erzielt werden, dass es zu unerwünschten sogenannten "Mehrfach-Schaltvorgängen" kommt, bei welchen ein zeitlich nachfolgender Schaltvorgang eingeleitet wird, bevor der zeitlich vorhergehende Schaltvorgang an der Hinterrad-Ritzelanordnung abgeschlossen ist.

Weitere veränderte Anforderungen ergeben sich bei Reduzierung der Anzahl an vorderen Kettenblättern, da dann der Drehmoment-Übertragungsbereich des Fahrrads zunehmend von der Hinterrad-Ritzelanordnung bereitgestellt werden muss. Dies geht so weit, dass bei einem einzigen vorderen Kettenblatt der gesamte verfügbare Drehmoment-Übertragungsbereich allein von der Ausgestaltung der Hinterrad-Ritzelanordnung abhängt.

Die Verringerung der Anzahl an Kettenblättern führt auch zu teilweise verschärften Schrägstellungssituationen der zwischen dem oder den Kettenblättern und der Hinterrad-Ritzelanordnung umlaufenden Fahrradkette im Betrieb.

Es ist Aufgabe der vorliegenden Erfindung, bekannte Hinterrad-Ritzelanordnungen für ein Fahrrad derart weiterzubilden, dass sie den oben genannten Anforderungen besser entsprechen können, als dies für Hinterrad-Ritzelanordnungen des Standes der Technik der Fall ist.

Diese Aufgabe wird gemäß der vorliegenden Erfindung gelöst durch eine Hinterrad-Ritzelanordnung für ein Fahrrad, umfassend wenigstens sieben koaxial angeordnete Ritzel mit unterschiedlichen Zähnezahlen, wobei der gesamte Gangbereich der Ritzelanordnung wenigstens 350 %, vorzugsweise wenigstens 400 %, besonders bevorzugt wenigstens 435 % beträgt, und wobei der durchschnittliche prozentuale Gangstufenschritt in einem Bereich von 20 bis 30 % liegt.

Der einzelne prozentuale Gangstufenschritt ist eingangs definiert als Differenz der Zähnezahlen zweier axial unmittelbar benachbarter Ritzel, geteilt durch die Zähnezahl des kleineren der benachbarten Ritzel. Der durchschnittliche prozentuale Gangstufenschritt der Hinterrad-Ritzelanordnung ist definiert als die Gesamtsumme der einzelnen prozentualen Gangstufenschritte geteilt durch die Anzahl an Gangstufenschritten. Eine Ritzelanordnung mit k Ritzeln mit jeweils unterschiedlichen Zähnezahlen weist dabei k-1 Gangstufenschritte auf.

Der gesamte Gangbereich der Ritzelanordnung ist definiert als das Verhältnis der Zähnezahl des größten Ritzels zur Zähnezahl des kleinsten Ritzels.

Durch den angegebenen Mindest-Gangbereich von wenigstens 350 % kann die Hinterrad-Ritzelanordnung der vorliegenden Erfindung ein an der Tretkurbel eines Fahrrads eingeleitetes Drehmoment, welches über die zwischen Kettenblatt und Ritzelanordnung verlaufende Fahrradkette an die Hinterrad-Ritzelanordnung übertragen wird, in einem breiten Bereich übertragen. Damit kann sowohl bei Reduzierung der Anzahl an vorderen Kettenblättern als auch bei wahlweiser Einleitung eines unterstützenden Drehmoments von einem Elektromotor zusätzlich zu der vom Fahrradfahrer gelieferten Muskelkraft über die Hinterrad-Ritzelanordnung auf das Hinterrad eines Fahrrads ein der jeweiligen Fahrsituation angemessenes Drehmoment übertragen werden. So kann ein an der Tretkurbel und damit am vorderen Kettenblatt eingeleitetes Drehmoment an der Hinterrad-Ritzelanordnung "ins Schnelle" bzw. "ins Schwache" untersetzt oder - etwa bei Bergauffahrt - "ins Langsame" bzw. "ins Starke" übersetzt werden.

Mit einem durchschnittlichen prozentualen Gangstufenschritt von 15 bis 30 %, vorzugsweise sogar von 17, 18 oder 20 bis 30 %, ist der durchschnittliche Gangstufenschritt zwar größer als bei bekannten Ritzelanordnungen mit großer Ritzelanzahl, jedoch deutlich kleiner als bei bekannten Ritzelanordnungen mit großem Gangbereich. Somit werden im Betrieb der Ritzelanordnung beim Schalten von einem Ritzel auf ein axial benachbartes Ritzel unerwünscht große Drehmomentsprünge vermieden. Gleichzeitig kann mit einer Ritzelanzahl von bereits wenigstens sieben koaxial angeordneten Ritzeln der Montageaufwand und der von der Ritzelanordnung geforderte Bauraum vorteilhaft in Grenzen gehalten werden.

Mit der vorgeschlagenen Hinterrad-Ritzelanordnung wird bei seiner Verwendung an "Pedelecs" auch das Problem der "Mehrfach-Schaltvorgänge" vermieden: Durch die vorgeschlagene Abstufung der Hinterrad-Ritzelanordnung anhand des angegebenen Wertebereichs für den durchschnittlichen prozentualen Gangstufenschritt wird nicht nur ein beim Schalten wahrnehmbarer übermäßiger Drehmomentsprung vermieden, sondern auch der Abstand zwischen Übertragungsverhältnissen axial unmittelbar benachbarter Ritzel so weit vergrößert, dass bei Verwendung von handelsüblichen unterstützenden Elektromotoren selbst bei Einleitung eines hohen Drehmoments in die Tretkurbelwelle ein zeitlich ausreichend großer Abstand zwischen zwei aufeinanderfolgenden Schaltvorgängen liegt, sodass der zeitlich vorausgehende der beiden Schaltvorgänge abgeschlossen werden kann, bevor der diesem zeitlich folgende eingeleitet wird.

Um zu starke Unterschiede in den einzelnen Gangstufenschritten zu vermeiden, ist es vorteilhaft, wenn die Werte der einzelnen prozentualen Gangstufenschritte in einem Bereich von 15 bis 35 % liegen, d. h. kein einzelner prozentualer Gangstufenschritt ist kleiner als 15 % und keiner ist größer als 35 %. Somit ist innerhalb der vorgegebenen Grenzen eine gewisse Variabilität der einzelnen prozentualen Gangstufenschritte möglich, sodass abhängig von der jeweils gewählten Gangstufe ein unterschiedlich großer Schritt zur nächstkleineren oder zur nächstgrößeren Gangstufe vorgesehen sein kann. Hierdurch kann auf unterschiedliche Drehmomentanforderungen in unterschiedlichen Fahrsituationen Rücksicht genommen werden. Insgesamt wird jedoch von dem ein Fahrrad mit der erfindungsgemäßen Hinterrad-Ritzelanordnung fahrenden Fahrradfahrer eine möglichst gleichmäßige Veränderung des Übertragungsverhältnisses über die Gangstufen der Hinterrad-Ritzelanordnung hinweg wahrgenommen.

Um den oben genannten unterschiedlichen Drehmomentanforderungen unterschiedlicher Fahrsituationen Rechnung tragen zu können, kann darüber hinaus daran gedacht sein, die einzelnen prozentualen Gangstufenschritte zwischen axial unmittelbar benachbarten Ritzeln gezielt einzustellen. So kann daran gedacht sein, dass die Hinterrad-Ritzelanordnung eine Gruppe progressiv größer werdender axial aufeinanderfolgender Ritzel umfasst, zwischen welchen die Werte axial aufeinanderfolgender einzelner prozentualer Gangstufenschritte - bei Betrachtung in einer axialen Richtung vom kleinsten Ritzel zum größten Ritzel hin - von einer Gangstufe zur nächstgrößeren zunehmen. Beim Schalten durch diese Gruppe in Richtung hin zum größten Ritzel kann somit insgesamt ein großer Drehmomentübertragungsbereich durchschritten werden, wobei die prozentualen Änderungen im Übertragungsverhältnis mit größer werdenden Ritzeln immer größer werden. So kann beispielsweise beim Herunterschalten (d. i. ein Schaltvorgang auf ein Ritzel mit einer höheren Zähnezahl) zunehmend schnell "ins Langsame" bzw. "ins Starke" geschaltet werden. Ein solcher Gangstufenbereich kann hervorragend als Beschleunigungsbereich zur motorisch unterstützten Beschleunigung eines Fahrrads verwendet werden.

Ebenso kann die Hinterrad-Ritzelanordnung eine Gruppe degressiv größer werdender axial aufeinanderfolgender Ritzel umfassen, zwischen welchen die Werte axial aufeinanderfolgender einzelner prozentualer Gangstufenschritte - bei Betrachtung in einer axialen Richtung vom kleinsten Ritzel zum größten Ritzel hin - von einer Gangstufe zur nächsten abnehmen. In diesem Falle werden also die prozentualen Änderungen im Übertragungsverhältnis beim Durchschalten durch diese Gruppe in Richtung zu größer werdenden Ritzeln hin immer kleiner. Eine Gruppe mit degressiv größer werdenden Ritzeln kann besonders für solche Gangstufenbereiche verwendet werden, für die ein - im Vergleich zu anderen Gangstufenbereichen erhöhter - Anteil an Muskel-Antriebskraft erwartet wird.

Es sei an dieser Stelle klargestellt, dass ein Ritzel zu beiden genannten Gruppen gehören kann. Dies ist beispielsweise für randseitige Ritzel der Fall, sodass ein größtes Ritzel der einen Gruppe das kleinste Ritzel der jeweils anderen Gruppe sein kann.

Vorzugsweise weist die Hinterrad-Ritzelanordnung zwei Gruppen von degressiv größer werdenden axial aufeinanderfolgenden Ritzeln auf, wobei weiter bevorzugt die oben genannte Gruppe progressiv größer werdender axial aufeinanderfolgender Ritzel axial zwischen zwei Gruppen von degressiv größer werdenden axial aufeinanderfolgenden Ritzeln gelegen ist. Bezugsrichtung ist dabei wie zuvor die axiale Richtung vom kleinsten Ritzel zum größten Ritzel hin.

Ein degressiv größer werdender Gangstufenbereich kann daher im Bereich der kleinsten Ritzel, etwa der kleinsten zwei oder drei Ritzel, gelegen sein, da beim Fahren in diesen "schnellen" Gängen aufgrund der zuvor erläuterten Beschränkung der Motorunterstützung auf Geschwindigkeiten unterhalb einer vorbestimmten Grenzgeschwindigkeit in der Regel nur noch eine reduzierte oder gar keine Unterstützung des Fahrers durch den Elektromotor stattfindet. Der Fahrer ist in diesen Gangstufen vorwiegend auf seine Muskelkraft angewiesen. Dort, wo der Fahrer zur Erzielung eines Vortriebs vorwiegend auf Muskelkraft angewiesen ist, ist es aus ergonomischen Gründen vorteilhaft, wenn die Gangstufenschritte kleiner gewählt sind als dort, wo die volle Unterstützung des Elektromotors zur Verfügung steht.

Überraschenderweise kann es auch sinnvoll sein, die ganz "langsamen" Gänge, also die Gänge mit den größten Ritzeln, etwa den zwei oder drei größten Ritzeln der Ritzelanordnung, als degressiv größer werdender Gangstufenbereich auszugestalten. Zwar bieten diese Gangstufen zweifellos ein Übertragungsverhältnis, bei welchem unter sonst üblichen Betriebsbedingungen eine Geschwindigkeit des Fahrrads zu erwarten ist, die unterhalb der Grenzgeschwindigkeit liegt und für die eine volle elektromotorische Unterstützung des Fahrers zulässig ist. Jedoch sind diese Gang stufen in der Regel "Berggänge", die beim Befahren von Steigungen ("Bergauffahrt") ausgewählt werden, und bei denen ein hohes Antriebsdrehmoment und damit eine hohe Antriebsleistung auch über längere Zeit abgerufen wird.

In der Regel besteht für die elektromotorische Unterstützung des Fahrers eine Begrenzung der vom unterstützenden Elektromotor abgegebenen Dauerleistung. Diese Dauerleistung kann zwar kurzfristig überschritten werden, um eine kurze, aber hohe Lastanforderung schnell zu bewältigen. Dauert die Fahrt auf einer Steigung jedoch über eine längere Zeit hin an - etwa über eine Dauer von mehr als 30 oder 60 Sekunden - kann der unterstützende Elektromotor nur noch die gesetzlich erlaubte Dauerleistung abgeben, sodass auch für diesen Belastungsfall ein erhöhter Anteil von Muskel-Antriebskraft zu erwarten ist.

Der progressiv größer werdende Gangstufenbereich kann daher vorteilhaft zwischen den beiden oben geschilderten degressiv größer werdenden Gangstufenbereichen gelegen sein.

Um gerade hohe Beschleunigungswerte im niedrigen Geschwindigkeitsbereich erzielen zu können, was insbesondere für die zuvor genannten "Pedelecs" vorteilhaft ist, da bei diesen der unterstützende Elektromotor sein Drehmoment nur bis zu einer vorbestimmten Grenzgeschwindigkeit des Fahrrads abgeben darf, ist es vorteilhaft, wenn der größte einzelne prozentuale Gangstufenschritt zwischen Ritzeln auftritt, die dem Geschwindigkeitsbereich zugeordnet sind, in welchem eine Drehmomentunterstützung durch den Elektromotor gestattet ist. Dann nämlich braucht der große einzelne prozentuale Gangstufenschritt nicht allein durch Muskelkraft überwunden werden - wenngleich dies bei Einhaltung der oben genannten Bedingungen ohne weiteres möglich ist. Da Hinterrad-Ritzelanordnungen an einem Fahrrad stets zusammen mit wenigstens einem vorderen Kettenblatt eingesetzt werden, kann unter Berücksichtigung der möglichen Kettenblätter und Hinterräder sowie unter Annahme einer üblicherweise von einem Fahrradfahrer, gegebenenfalls unter Unterstützung durch den Elektromotor, abgebbaren Leistung ohne Weiteres jedem Ritzel der Ritzelanordnung eine Fahrrad-Geschwindigkeit oder wenigstens ein Fahrrad-Geschwindigkeitsbereich zugeordnet werden. Daher ist es aus den oben genannten Gründen besonders vorteilhaft, wenn der größte einzelne prozentuale Gangstufenschritt zwischen dem drittgrößten und dem viertgrößten Ritzel oder/und zwischen dem viertgrößten und dem fünftgrößten Ritzel auftritt. Es kann dabei auch daran gedacht sein - und dies ist im vorliegenden Fall sogar bevorzugt - wenn die beiden einzelnen prozentualen Gangtufenschritte zwischen dem drittgrößten und dem viertgrößten Ritzel sowie zwischen dem viertgrößten und dem fünftgrößten Ritzel gleich groß sind. Letzteres ist insbesondere für eine Ritzelanordnung mit genau acht Ritzeln bevorzugt.

Zur Sicherstellung des gewünschten großen Gangbereichs bei Vermeidung einer gleichzeitig hohen Belastung der Fahrradkette kann das größte Ritzel mehr als 40 Zähne, beispielsweise wenigstens 44 Zähne, vorzugsweise wenigstens 48 Zähne aufweisen. Wie weiter unten noch gezeigt werden wird, ist die Zähnezahl 48 für das größte Ritzel gegenüber 44 Zähnen bevorzugt, da die Zahl 48 mehr ganzzahlige Teiler aufweist als die Zahl 44. Dies ist für den präzisen Ablauf von Schaltvorgängen zu diesem Ritzel hin vorteilhaft.

Ebenso kann das kleinste Ritzel wenigstens 10, vorzugsweise wenigstens 11 Zähne aufweisen. Um den mit der Ritzelanordnung erzielbaren Gangbereich nicht unnötig einzuschränken, sollte das kleinste Ritzel nicht mehr als 13 Zähne aufweisen.

Zur Sicherstellung präziser Schaltvorgänge zwischen einzelnen Ritzeln ist es vorteilhaft, wenn die Zähnezahl eines jeden der vier größten Ritzel der Hinterrad-Ritzelanordnung ein ganzzahliges Vielfaches von 4 ist. Zur Erzielung der Werte der oben genannten einzelnen prozentualen Gangstufenschritte gerade bei den größten Ritzeln ist es jedoch bevorzugt, wenn die Zähnezahl ein ganzzahliges Vielfaches von 8 ist. In diesem Falle kann die zur Erzielung äußerst präziser Schaltvorgänge vorteilhafte Situation erreicht werden, dass die Zähnezahlen axial unmittelbar benachbarter Ritzel - hier der vier größten Ritzel - durch die Differenz der Zähnezahlen der axial unmittelbar benachbarten Ritzel teilbar ist.

Für die kleineren Ritzel müssen jedoch in der Regel andere Bedingungen gelten als für die zuvor genannten vier größten Ritzel. Würde man hier die oben genannten Achtersprünge fortsetzen, würden die einzelnen prozentualen Gangstufenschritte zum kleinsten Ritzel hin unerwünscht groß. Dies kann dadurch vermieden werden, dass die Zähnezahl eines jeden von 3 Ritzeln aus einer Gruppe von vier axial aufeinanderfolgenden Ritzeln, wobei diese Gruppe die Ritzel vom viertgrößten bis zum siebtgrößten Ritzel umfasst, ein ganzzahliges Vielfaches von 3, besser noch ein ganzzahliges Vielfaches von 6 ist. Wiederum sei klargestellt, dass das viertgrößte Ritzel bevorzugt alle oben genannten Bedingungen erfüllt, etwa wenn es 24 Zähne umfasst, sodass seine Zähnezahl sowohl durch 8, als auch durch 6, als auch durch 4, als auch durch 3 teilbar ist.

Aus den oben genannten Gründen eines möglichst präzisen Schaltverhaltens weist die Hinterrad-Ritzelanordnung gemäß einer vorteilhaften Weiterbildung der Erfindung wenigstens fünf Ritzel, vorzugsweise wenigstens sechs Ritzel auf, für die folgende Teilbarkeitsbedingung gilt, dass die Zähnezahlen zweier axial unmittelbar benachbarter Ritzel durch die Differenz dieser Zähnezahlen ohne Rest teilbar ist. Vorzugsweise handelt es sich dabei um die fünf, vorzugsweise sechs, größten Ritzel der Ritzelanordnung. Dann, wenn die Ritzelanordnung insgesamt genau sieben Ritzel aufweist, kann sie genau fünf Ritzel aufweisen, für die die genannte Teilbarkeitsbedingung erfüllt ist. Im Falle einer Ritzelanordnung mit insgesamt genau acht Ritzeln kann sie genau sechs Ritzel aufweisen, für die die genannte Teilbarkeitsbedingung erfüllt ist.

Die Verwendung einer Hinterrad-Ritzelanordnung mit wenigstens sieben Ritzeln hat den Vorteil, dass das größte Ritzel nicht notwendigerweise geschüsselt oder sonst wie mit gekröpftem Querschnitt ausgebildet werden muss. Es ist ausreichend Bauraum vorhanden, um das größte Ritzel als ebenes Ritzel bereitzustellen. Hierdurch kann auch das besonders belastete größte Ritzel den bei elektromotorischer Unterstützung aufgrund des höheren verfügbaren Drehmoments höheren Kettenlasten standhalten, ohne hierdurch Gewichtsnachteile, etwa durch zusätzliche Versteifungen und dergleichen, in Kauf nehmen zu müssen.

Bevorzugt ist das größte Ritzel nicht selbst unmittelbar zur Übertragung von Drehmoment auf die Fahrrad-Hinterradachse ausgebildet. Dies erfolgt bevorzugt durch einen mit der Fahrrad-Hinterradachse in an sich bekannter Weise gekoppelten Antreiber. Bevorzugt ist das größte Ritzel auch nicht selbst unmittelbar zur Übertragung von Drehmoment auf den Antreiber ausgebildet. Vielmehr ist vorgesehen, dass das größte Ritzel eine zentrale Öffnung aufweist, welche von dem Antreiber durchsetzt ist, wobei zwischen dem größten Ritzel selbst und dem Antreiber kein unmittelbarer Formschlusseingriff zur Drehmomentübertragung zwischen dem größten Ritzel und dem Antreiber besteht.

Eine Drehmomentübertragung zwischen dem größten Ritzel und einem Antreiber kann durch ein Adapterelement erfolgen, welches im Drehmomentübertragungsweg zwischen dem größten Ritzel und dem Antreiber angeordnet ist. Daher kann das größte Ritzel mit einem Antreiber zur Drehmomentübertragung durch ein Adapterelement gekoppelt sein, wobei das Adapterelement bevorzugt auf jener Seite des größten Ritzels gelegen ist, welche von den übrigen Ritzeln weg weist. Der vorliegend genannte eine Antreiber kann der im Absatz zuvor genannte Antreiber sein. Wenngleich denkbar ist, dass das Adapterelement nur teilweise auf der von den kleineren Ritzeln wegweisenden Seite des größten Ritzels gelegen ist, ist bevorzugt, dass das Adapterelement vollständig auf dieser Seite gelegen ist. Hierdurch ist es möglich, die gesamte Hinterrad-Ritzelanordnung an einem Fahrrad mit größerer axialer Entfernung von der Fahrrad-Längsmittenebene anzuordnen, als wenn das Adapterelement axial innerhalb der Ritzelanordnung angeordnet wäre. Hierdurch kann der Kettenschräglauf vor allem bei Ketteneingriff mit den großen Ritzeln reduziert werden. Aufgrund ihres großen Durchmessers werden die großen Ritzel durch Kettenschräglauf am höchsten belastet und haben aufgrund ihrer Größe eine höhere Knickneigung als die kleineren Ritzel der Ritzelanordnung.

Zur Erleichterung von Fertigung und Montage sowie zur Erzielung einer möglichst großen Stabilität und Steifigkeit der Ritzelanordnung kann vorgesehen sein, dass eine Mehrzahl von Ritzeln als einstückiges Ritzelbauteil innerhalb der Hinterrad-Ritzelanordnung ausgebildet ist. Grundsätzlich kann die gesamte Hinterrad-Ritzelanordnung als einstückiges Ritzelbauteil ausgebildet sein, wenngleich dies nicht bevorzugt ist. Bevorzugt ist das größte Ritzel als gesondertes Einzelritzel ausgebildet, etwa um für dieses Ritzel, bei welchem das größte Drehmoment auf das Fahrrad-Hinterrad übertragen wird, ein geeignetes Material unabhängig vom Material anderer Ritzel der Ritzelanordnung auswählen zu können. Das größte Ritzel kann auch als Einzelritzel zur Drehmomentübertragung unmittelbar mit dem ihm axial benachbarten zweitgrößten Ritzel verbunden sein. In der Regel ist dies zur möglichst effektiven Übertragung von Drehmoment auch der Fall.

Auch das kleinste Ritzel der Ritzelanordnung kann gesondert als Einzelritzel ausgebildet sein, um dieses leicht austauschbar zu machen. Hierdurch können hochbelastete verschlissene oder verformte Ritzel einfach ersetzt oder Drehmomentübertragungsverhältnisse durch Austausch von Ritzeln an veränderte Anforderungen angepasst werden.

Bevorzugt gilt der Aspekt der Ausbildung als Einzelritzel zur erleichterten Austauschbarkeit für jenes Ritzel, bei welchem unter der Annahme üblicher Trittfrequenzen in einem Bereich von 65 bis 75 Umdrehungen pro Minute sowie unter Berücksichtigung des bekannten Kettenblatts und des bekannten Hinterrads eines Fahrrads eine Fahrgeschwindigkeit erreicht wird, die der oben beschriebenen Unterstützungs-Grenzgeschwindigkeit entspricht, oberhalb welcher eine Unterstützung des Fahrers durch den Elektromotor unzulässig ist. Beobachtungen haben gezeigt, dass Fahrer von "Pedelecs" gerne den ihnen technisch zur Verfügung gestellten Rahmen an elektromotorischer Unterstützung ausschöpfen, jedoch in der Regel nicht versuchen, durch Beanspruchung eigener Muskelkraft über diesen hinauszugehen. Insofern ist bei "Pedelecs" eine überdurchschnittlich hohe Beanspruchung dieses der Unterstützungs-Grenzgeschwindigkeit (in Deutschland wie oben erwähnt 25km/h) zugeordneten Ritzels zu erwarten. Bevorzugt ist daher besonders dieses Ritzel als austauschbares Einzelritzel ausgestaltet. Dies ist in vielen Fällen das sechstgrößte Ritzel der Ritzelanordnung. Abhängig von der Gesamtanzahl an Ritzeln der Ritzelanordnung kann dieses Ritzel auch das fünftgrößte Ritzel oder das siebtgrößte Ritzel sein.

Somit sind vorzugsweise wenigstens drei, besonders bevorzugt wenigstens vier, höchstbevorzugt genau vier Ritzel der Hinterrad-Ritzelanordnung als ein einstückiges Ritzelbauteil innerhalb der Hinterrad-Ritzelanordnung ausgebildet. Das einstückige Ritzelbauteil enthält vorzugsweise das zweitgrößte Ritzel. Bevorzugt ist dagegen das zweitkleinste, eventuell auch das drittkleinste Ritzel, als gesondert ausgebildete Einzelritzel vorgesehen, um deren Austausch zu erleichtern.

Alternativ oder zusätzlich zur einstückigen Ausbildung mehrerer Ritzel können mehrere Ritzel, insbesondere jeweils zwei axial unmittelbar benachbarte Ritzel, auch durch Verbindungsmittel, wie etwa Stifte oder/und Niete oder/und Schrauben, unmittelbar miteinander verbunden sein. Zur Erzielung einer möglichst hohen Steifigkeit sind die Verbindungsmittel radial im Bereich der äußersten 50 % der Radialerstreckung des kleineren von zwei unmittelbar miteinander verbundenen Ritzeln zwischen diesen Ritzeln vorgesehen, bevorzugt im Bereich der äußersten 33 %, besonders bevorzugt im Bereich der äußersten 25 %, höchst bevorzugt im Bereich der äußersten 20 % der Radialerstreckung des kleineren der beiden unmittelbar miteinander verbundenen Ritzeln vorgesehen. Die Verbindungsmittel können mit einem der beiden unmittelbar verbundenen Ritzel, vorzugsweise mit dem kleineren Ritzel, einstückig ausgebildet sein. Die Verbindungsmittel sind zur Drehmomentübertragung um die gemeinsame Ritzelachse, vorzugsweise auch zur Übertragung von Axialkraft längs der Ritzelachse ausgebildet. Zur Erzielung einer möglichst stabilen Verbindung radial möglichst weit außen können die Verbindungsmittel mit dem kleineren von zwei unmittelbar axial benachbarten und miteinander verbundenen Ritzeln im Bereich seiner Zahnfüße verbunden sein.

Die für die Verbindungsmittel genannten bevorzugten radialen Bereiche ihrer Anbringung an oder zwischen einem Paar axial unmittelbar benachbarter Ritzel gelten ebenso für die Ausbildung einer unmittelbaren einstückigen Verbindung von zwei axial unmittelbar benachbarten Ritzeln miteinander.

Wenn eingangs gesagt wurde, dass die Hinterrad-Ritzelanordnung wenigstens sieben Ritzel umfasst, so kann die Hinterrad-Ritzelanordnung selbst verständlich auch deutlich mehr als sieben Ritzel umfassen. Dies ist allerdings gar nicht notwendig, um den gewünschten großen Gangbereich bei der oben genannten durchschnittlichen prozentualen Abstufung zu realisieren. Vorteilhafterweise umfasst die Hinterrad-Ritzelanordnung genau sieben oder genau acht oder genau neun Ritzel. Eine derartige Ritzelanzahl ermöglicht die oben genannte Ausbildung des größten Ritzels als ebenes Ritzel mit den oben genannten Vorteilen. Ebenso ermöglicht die genannte genaue Ritzelanzahl die oben genannte vorteilhafte Anordnung des Adapterelements axial außerhalb der Ritzelanordnung, also auf der von dem kleineren Ritzel wegweisenden Seite des größten Ritzels mit der oben beschriebenen Folge vorteilhaft verringerten Kettenschräglaufs an den größeren Ritzeln.

Grundsätzlich können beliebige Ketten mit der Hinterrad-Ritzelanordnung verwendet werden. Zur Erzielung einer geringen axialen Bauraumforderung der Ritzelanordnung ist es jedoch vorteilhaft, wenn ein Frontflächenabstand zwischen axial unmittelbar aufeinanderfolgenden Ritzeln zwischen 4,2 und 4,4 mm beträgt, vorzugsweise zwischen 4,3 und 4,4 mm, besonders bevorzugt 4,35 mm beträgt. Der "Frontflächenabstand" ist dabei der Abstand von zur gemeinsamen Ritzeldrehachse orthogonalen Frontflächen axial unmittelbar benachbarter Ritzel auf der zum jeweils kleineren Ritzel hin bzw. vom jeweils größeren Ritzel weg weisenden Seite des Ritzels in einem zahnnahen Bereich des Ritzelkörpers. Fachleute verstehen den Begriff der "Frontfläche", da an dieser Fläche die Position des hinteren Schaltwerks einer Kettenschaltung ausgerichtet wird. Die "Frontfläche" ist in der Regel jene Fläche auf der im montierten Zustand von der Fahrrad-Längsmittenebene weg weisenden Seite des Ritzels, auf der ein Ritzel unter Außerachtlassung etwaig vorhandener axial vorstehender Zähne und etwaig vorhandener nabennaher Vorsprünge auf einem ebenen Untergrund aufliegt.

Die mit der Hinterrad-Ritzelanordnung zusammenwirkende Fahrradkette ist entsprechend dem gewählten Frontflächenabstand auszuwählen.

Bevorzugt weist die erfindungsgemäße Hinterrad-Ritzelanordnung im Falle einer 7-fach-Ritzelanordnung die folgende Abstufung vom kleinsten zum größten Ritzel hin auf: 12, 14, 18, 24, 32, 40 und 48. Im Falle einer 8-fach-Ritzelanordnung ist die bevorzugte Abstufung dagegen die folgende: 11, 13, 15, 18, 24, 32, 40 und 48.

Die vorliegende Anmeldung betrifft gemäß einem weiteren Aspekt der vorliegenden Erfindung eine Hinterrad-Ritzelanordnung für ein Fahrrad, umfassend wenigstens sieben koaxial angeordnete Ritzel mit unterschiedlichen Zähnezahlen, wobei der gesamte Gangbereich der Ritzelanordnung - definiert als das Verhältnis der Zähnezahl des größten Ritzels zur Zähnezahl des kleinsten Ritzels - wenigstens 350 %, vorzugsweise wenigstens 400 %, besonders bevorzugt wenigstens 435 % beträgt, welche zusätzlich die Merkmale des kennzeichnenden Teils eines oder mehrerer der Ansprüche 2 bis 11 aufweist.

Die vorliegende Erfindung betrifft weiter eine Antriebsbaugruppe für ein Fahrrad mit einer Hinterrad-Ritzelanordnung, wie sie oben beschrieben ist, sowie mit einem vorderen Kettenblatt, wobei die Zähnezahl des vorderen Kettenblatts kleiner ist als die Zähnezahl des größten Ritzels und größer ist als die Zähnezahl des drittgrößten Ritzels. Somit kann zwischen dem vorderen Kettenblatt und dem größten Ritzel ein selbst große Steigungen überwindbar machender "Berggang" realisiert werden, während bereits mit dem Auflegen der Kette auf das drittgrößte Ritzel eine Untersetzung des Drehmoments "ins Schnelle" bzw. "ins Schwache" erfolgt. Das Kettenblatt und das zweitgrößte Ritzel können hierbei die gleiche Zähnezahl aufweisen, sodass bei Auflegen der Kette auf das zweitgrößte Ritzel das am Kettenblatt eingeleitete Drehmoment abgesehen von unvermeidlichen Reibungsverlusten unverändert zum Hinterrad hin übertragen wird.

Da die vorliegende Hinterrad-Ritzelanordnung gerade auch Anforderungen erfüllen soll, die sich an eine Antriebsbaugruppe für ein Fahrrad mit genau einem vorderen Kettenblatt stellen, umfasst die Antriebsbaugruppe bevorzugt genau ein vorderes Kettenblatt. Für den Fall, dass mehr als ein vorderes Kettenblatt vorhanden ist, sollen die im vorhergehenden Anspruch angegebenen Bedingungen für das größte Kettenblatt gelten.

Entscheidend soll dabei die "wirksame Zähnezahl" des Kettenblattes sein, also eine Zähnezahl, die sich unter Berücksichtigung eines etwaig zwischen dem Ort der Drehmomenteinleitung und dem Kettenblatt angeordneten Getriebes sowie seines Übertragungsverhältnisses ergibt. Wenn beispielsweise zwischen dem Ort der Drehmomenteinleitung und einem Kettenblatt mit nur 16 Zähnen ein Getriebe vorgesehen ist, welches das eingeleitete Drehmoment zum Kettenblatt hin um den Faktor 2,5 erhöht, also "ins Starke" übersetzt, - wobei aus Gründen der Energieerhaltung die Drehzahl, bei der das Drehmoment eingeleitet wird, um denselben Faktor verringert wird - hat das Kettenblatt eine um das 2,5-fache erhöhte wirksame Zähnezahl, in diesem Beispielfall also von 40 Zähnen.

Da die vorliegende Hinterrad-Ritzelanordnung besonders geeignet für das Zusammenwirken mit einem den Fahrradfahrer unterstützenden Elektromotor ist, umfasst die Antriebsbaugruppe ferner vorzugsweise einen unterstützenden Elektromotor, welcher dazu ausgebildet oder/und angeordnet ist, sein Unterstützungsdrehmoment zum Hinterrad über die Hinterrad-Ritzelanordnung zu übertragen. Der unterstützende Elektromotor kann dabei mit dem Kettenblatt zur Drehmomentübertragung gekoppelt oder koppelbar sein. Beispielsweise kann der Elektromotor mit der Tretkurbelwelle gekoppelt oder koppelbar sein, mit welcher auch die vom Fahrradfahrer betätigten Tretkurbeln gekoppelt sind. Die Kopplung des Elektromotors mit dem Kettenblatt oder mit der Tretkurbelwelle kann durch ein Getriebe, etwa ein Planetengetriebe, erfolgen.

Die vorliegende Erfindung betrifft schließlich ein Fahrrad mit einer Hinterrad-Ritzelanordnung, wie sie oben beschrieben ist, oder/und mit einer Antriebsbaugruppe, wie sie zuvor beschrieben wurde.

Die vorliegende Erfindung wird nachfolgend anhand der beiliegenden Zeichnungen näher erläutert. Es stellt dar:
- Figur 1: eine grobschematische Seitenansicht eines Fahrrads, welches mit einer erfindungsgemäßen Antriebsbaugruppe unter Verwendung einer erfindungsgemäßen Hinterrad-Ritzelanordnung ausgerüstet ist (die Hinterrad-Ritzelanordnung ist lediglich grobschematisch angedeutet),
- Figur 2: eine die gemeinsame Ritzelachse enthaltende detaillierte Längsschnittansicht einer erfindungsgemäßen Ausführungsform einer Hinterrad-Ritzelanordnung mit acht Ritzeln und
- Figur 3: eine perspektivische Längsschnittansicht der Ritzelanordnung von Figur 1.

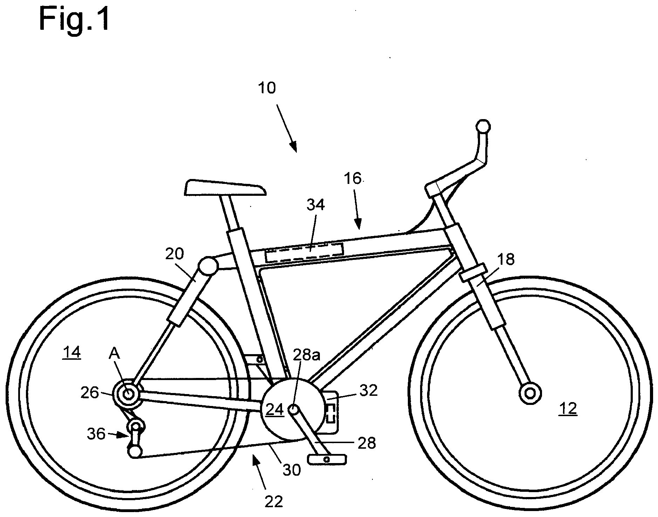

In Figur 1 ist ein mit einer erfindungsgemäßen Ritzelanordnung versehendes Fahrrad allgemein mit 10 bezeichnet. Ein Vorderrad 12 und ein Hinterrad 14 sind an einem Fahrradrahmen 16 um jeweilige zur. Zeichenebene der Figur 1 orthogonale Radachsen drehbar befestigt. Das Vorderrad 12 kann über eine gefederte Gabel 18 mit dem Fahrradrahmen 16 verbunden sein. Auch das Hinterrad 14 kann über eine gefederte Aufhängung 20 mit dem Fahrradrahmen 16 verbunden sein.

Das Hinterrad 14 ist über eine Antriebsbaugruppe 22, umfassend ein einzelnes vorderes Kettenblatt 24 und eine lediglich in Figur 1 grobschematisch dargestellte Hinterrad-Ritzelanordnung 26, antreibbar. Das Antriebsdrehmoment kann über Tretkurbeln 28 und eine mit diesen verbundene Tretkurbelwelle 28a auf das vordere Kettenblatt 24 und von diesem mittels einer Fahrradkette 30 über die Hinterrad-Ritzelanordnung 26 auf das Hinterrad 14 übertragen werden. Zur Unterstützung eines die Tretkurbeln 28 mit Muskelkraft antreibenden Fahrradfahrers kann ein unterstützender Elektromotor 32 am Fahrradrahmen 16 derart angeordnet sein, dass auch dieser sein unterstützendes Antriebsdrehmoment über die Tretkurbelwelle 28a zum vorderen Kettenblatt 24 hin überträgt. Zwischen der Tretkurbelwelle 28a und dem Kettenblatt 24 kann ein Getriebe, insbesondere Planetengetriebe, vorgesehen sein. Das Übertragungsverhältnis des Getriebes ist bei der Berechnung der wirksamen Zähnezahl des Kettenblatts 24 zu berücksichtigen. Die tatsächliche Zähnezahl des Kettenblatts 24 ist dabei mit dem Faktor zu multiplizieren, mit welchem das Getriebe ein in es eingeleitetes Drehmoment zu seiner Abtriebsseite hin überträgt. Eine Erhöhung des Drehmoments durch das Getriebe führt somit zu einer gegenüber der tatsächlichen Zähnezahl erhöhten wirksamen Zähnezahl des Kettenblatts 24 und umgekehrt.

Eine Batterie 34 als Energiespeicher für den unterstützenden Elektromotor 32 kann im oder am Rahmen 16 vorgesehen sein.

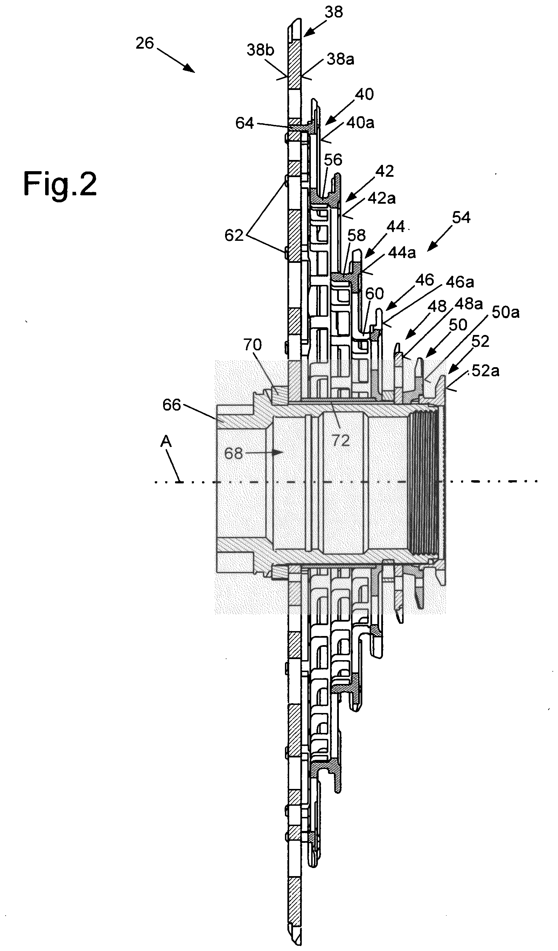

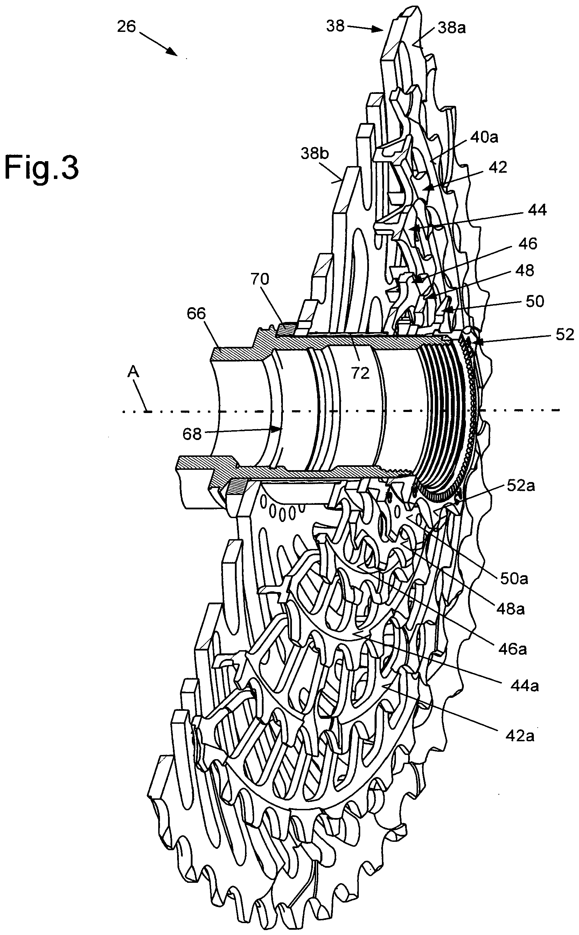

Die Hinterrad-Ritzelanordnung 26 oder auch nur Ritzelanordnung 26 weist, wie die Figuren 2 und 3 zeigen, eine Reihe koaxialer Ritzel unterschiedlicher Zähnezahlen auf, wobei die Zähnezahlen im montierten Zustand von Figur 1 von der zur Zeichenebene der Figur 1 parallelen Längsmittenebene des Fahrrads 10 nach außen hin stetig abnehmen.

Die Fahrradkette 30 kann in an sich bekannter Weise durch ein Schaltwerk 36 mit einem vom Fahrer auszuwählenden Ritzel aus der Mehrzahl von Ritzeln der Ritzelanordnung 26 zur Drehmomentübertragung auf das Hinterrad 14 in kämmenden Eingriff gebracht werden. Die Fahrradkette 30 ist eine an sich bekannte Rollenkette, wie sie für den Einsatz an Fahrrädern typisch ist.

Sowohl das Muskel-Drehmoment des Fahrradfahrers wie auch das unterstützende Drehmoment des Elektromotors 32 werden am Beispielsfahrrad 10 über die Hinterrad-Ritzelanordnung 26 zum Hinterrad 14 übertragen. Der Elektromotor 32 hat somit die Wirkung, als ob der Fahrradfahrer eine um die Unterstützungsleistung des Elektromotors 32 erhöhte Tretleistung abrufen könnte.

Da das beispielhaft gezeigte Fahrrad 10 über genau ein vorderes Kettenblatt 24 verfügt, ist der gesamte Gangbereich des Fahrrads 10 durch die Hinterrad-Ritzelanordnung 26 realisiert. Eine Längsschnittansicht durch diese Ritzelanordnung 26 ist in Figur 2 gezeigt. Figur 3 zeigt eine perspektivische Längsschnittansicht durch die Ritzelanordnung 26 von Figur 2.

Die beispielhaft gezeigte Ritzelanordnung 26 weist acht Ritzel 38, 40, 42, 44, 46, 48, 50 und 52 auf, welche koaxial bezüglich einer gemeinsamen Ritzelachse A angeordnet sind. Die Ritzelachse A ist auch die Drehachse des Hinterrads 14. Die Ritzelachse A ist orthogonal zur Zeichenebene von Figur 1 und liegt in der Zeichenebene von Figur 2.

Von den genannten Ritzeln 38 bis 52 ist das Ritzel 38 das größte Ritzel und ist das Ritzel 52 das kleinste Ritzel.

Das größte Ritzel 38, welches vorzugsweise eben ausgebildet ist, weist im vorliegenden Beispiel 48 Zähne auf. Die Zähnezahlen der Ritzel 40 bis 52 betragen in der genannten Reihenfolge 40, 32, 24, 18, 15, 13 und 11. Das größte Ritzel 38 ist als Einzelritzel ausgebildet, ebenso die Ritzel 48, 50 und 52. Die Ritzel 40, 42, 44 und 46 sind dagegen bevorzugt als einstückiger Ritzeldom 54 ausgebildet. Somit können die Ritzel 48, 50 und 52 erforderlichenfalls einzeln ausgetauscht werden.

Bevorzugt sind die Ritzel 40 bis 46 des Ritzeldoms 54 durch einstückig mit den jeweiligen Ritzeln ausgebildete Stege 56, 58, 60 verbunden, welche Stege jeweils zwischen zwei axial unmittelbar benachbarten Ritzeln angeordnet sind. Die Stege 56 bis 60 sind dabei so weit als möglich radial außen vorgesehen, um einen möglichst stabilen und steifen Ritzeldom 54 zu erhalten. Die Stege liegen je nach Ritzelgröße in den radial äußersten 15 bis 25 % des radialen Erstreckungsbereichs des kleineren der zwei unmittelbar miteinander verbundenen, axial benachbarten Ritzel, gemessen jeweils von der Ritzelachse A. Bevorzugt enden die Stege am kleineren der zwei unmittelbar verbundenen Ritzel im Bereich eines Zahnfußes.

Am größten Ritzel 40 des Ritzeldoms 54 sind vorteilhafterweise von diesem in Richtung von den kleineren Ritzeln 42, 44 und 46 des Ritzeldoms 54 weg abstehende Stege 62 angeformt, die der Verbindung mit dem größten Ritzel 38 dienen. Diese sind jedoch nicht einstückig mit dem größten Ritzel 38 verbunden.

In der oberen Bildhälfte von Figur 2 ist eine alternative Verbindung des Ritzels 40 mit dem größten Ritzel 38 beispielhaft dargestellt. So kann am Ritzel 40 auf der dem größten Ritzel 38 zugewandten Seite einstückig ein Stift 64 angeformt sein, welcher das Ritzel 38 durchsetzt. Anstelle eines an das Ritzel 40 angeformten Stiftes kann der Stift 64 auch gesondert von den durch ihn verbundenen Ritzeln 38 und 40 ausgebildet sein oder der Stift 64 kann einstückig am Ritzel 38 ausgeformt sein, und zwar dann auf der zum Ritzel 40 hinweisenden Seite und kann das Ritzel 40 durchsetzen.

Die einstückige Verbindung der Ritzel 40 bis 46 miteinander zur Bildung des Ritzeldoms 54 kann ganz oder teilweise durch die dargestellte oder durch die oben erläuterte Verstiftung mit dem Stift 64 ersetzt sein.

Die Ritzelanordnung 26 weist mit der oben genannten Abstufung der Ritzel 38 bis 52 einen Gangbereich von 48 geteilt durch 11 auf, das sind etwa 436,4 %. Die einzelnen prozentualen Gangstufenschritte vom kleinsten Ritzel 52 zum größten Ritzel 38 betragen 13 minus 11 geteilt durch 11, das sind etwa 18,2 %, 15 minus 13 geteilt durch 13, das sind etwa 15,4 %, 18 minus 15 geteilt durch 15, das sind 20 %, 24 minus 18 geteilt durch 18, das sind etwa 33,3 %, 32 minus 24 geteilt durch 24, das sind wiederum etwa 33,3 %, 40 minus 32 geteilt durch 32, das sind 25 % und 48 minus 40 geteilt durch 40, das sind 20 %. Alle Gangstufenschritte liegen somit in einem Bereich von zwischen 15,4 und 33,3 %. Somit ist es möglich, einen großen Gangbereich verhältnismäßig gleichmäßig in ebenfalls verhältnismäßig wenig Gangstufen zu unterteilen. Gleichzeitig ist kein Gangstufenschritt so groß, dass bei einem Schaltvorgang in eine Gangstufe oder aus dieser heraus der Fahrradfahrer einen unangenehm großen Drehmomentsprung wahrnehmen würde.

Das arithmetische Mittel der oben berechneten einzelnen prozentualen Gangstufenschritte, also der durchschnittliche prozentuale Gangstufenschritt, beträgt am dargestellten Beispiel etwa 23,6 %.

Das vordere Kettenblatt 24 weist vorteilhafterweise eine wirksame Zähnezahl von 40 Zähnen auf, was bei dem vorliegend dargestellten elektromotorisch unterstützten "Pedelec" 10 üblicherweise durch ein Kettenblatt mit 16 Zähnen und einem vorgeschalteten Getriebe mit 2,5-facher Drehmomentverstärkung vom Ort der Drehmomenteinleitung zum Kettenblatt 24 hin erreicht wird.

Geht man am beispielhaft dargestellten Fahrrad 10 von einer durchaus üblichen Trittfrequenz von 65 Umdrehungen pro Minute aus, dann wird unter Verwendung des jeweiligen in seiner Größe ebenfalls bekannten Hinterrads mit der Kette am größten Ritzel 38 eine Geschwindigkeit von etwa 7,5 km/h erreicht, am zweitgrößten Ritzel 40 eine Geschwindigkeit von etwa 9 km/h erreicht, am drittgrößten Ritzel 42 eine Geschwindigkeit von 11,2 km/h erreicht, am viertgrößten Ritzel 44 eine Geschwindigkeit von etwa 15 km/h erreicht, am fünftgrößten Ritzel 46 eine Geschwindigkeit von etwa 19,9 km/h erreicht, am sechstgrößten Ritzel 48 eine Geschwindigkeit von etwa 23,9 km/h erreicht, am siebtgrößten Ritzel 50 eine Geschwindigkeit von 27,6 km/h erreicht und am kleinsten Ritzel 52 eine Geschwindigkeit von 32,6 km/h erreicht.

Abhängig von den jeweiligen gesetzlichen Vorgaben ist bei elektromotorisch unterstützten Fahrrädern eine Abgabe eines unterstützenden Drehmoments durch den Elektromotor nur bis zu einer vorbestimmten Geschwindigkeitsgrenze gestattet. In Deutschland ist beispielsweise eine Unterstützung des Fahrradfahrers durch das vollständige Drehmoment des unterstützenden Elektromotors 32 nur bis zu einer Geschwindigkeit von 25 km/h gestattet. Bei höheren Geschwindigkeiten ist entweder keine Unterstützung mehr gestattet oder - bei Geschwindigkeiten geringfügig über der Grenzgeschwindigkeit von 25 km/h - nur noch eine Teil-Unterstützung durch ein gegenüber dem vollständigen unterstützenden Drehmoment verringertes Teil-Drehmoment.

Bei der vorliegenden Hinterrad-Ritzelanordnung 26 des dargestellten Beispiels findet daher eine volle Unterstützung des Fahrradfahrers durch das Drehmoment des Elektromotors 32 unter den gegebenen Annahmen eines vorderen Kettenblatts 24 mit einer wirksamen Zähnezahl von 40 und einer Trittfrequenz von 65 Umdrehungen pro Minute nur in Gangstufen auf, die durch die sechs größten Ritzel 38 bis 48 gebildet sind. Im vorliegenden Fall ist daher das Ritzel 48 dass der Unterstützungs-Grenzgeschwindigkeit von 25 km/h zugeordnete Ritzel, für welches aus den in der Beschreibungseinleitung genannten Gründen ein besonders starker Verschleiß erwartet werden kann.

Zur vorteilhaften Ausnutzung der größtmöglichen Unterstützung des Fahrradfahrers durch den unterstützenden Elektromotor 32 liegen die größten einzelnen prozentualen Gangstufenschritte in diesem durch die sechs größten Ritzel 38 bis 48 gebildeten "Unterstützungsbereich". Vorteilhafterweise liegen die größten einzelnen prozentualen Gangstufenschritte von jeweils 33,3 % zwischen dem drittgrößten und dem viertgrößten Ritzel 42 bzw. 44 sowie zwischen dem viertgrößten und dem fünftgrößten Ritzel 44 bzw. 46. Der drittgrößte einzelne prozentuale Gangstufenschritt von 25 % (nominell eigentlich der zweitgrößte einzelne prozentuale Gangstufenschritt) ist zwischen dem zweitgrößten und dem drittgrößten Ritzel 40 bzw. 42 vorgesehen. Hierdurch wird eine hohe Beschleunigung unter gleichzeitiger Vermeidung von unerwünschten Mehrfach-Schaltvorgängen erreicht.

Die drei kleinsten Ritzel 52, 50 und 48 bilden eine erste Gruppe von Ritzeln, die bei Betrachtung in axialer Richtung vom kleinsten Ritzel 52 zum größten Ritzel 38 hin degressiv größer werden. Dies bedeutet, die zwischen diesen Ritzeln 52 bis 48 gelegenen einzelnen prozentualen Gangstufenschritte werden in der Richtung vom kleinsten Ritzel 52 zum größten Ritzel 38 hin kleiner.

Die drei axial unmittelbar aufeinander folgenden Ritzel 48, 46 und 44 bilden eine zweite Gruppe von Ritzeln, die bei Betrachtung in axialer Richtung vom kleinsten Ritzel 52 zum größten Ritzel 38 hin progressiv größer werden. Dies bedeutet, die zwischen den Ritzeln 48 bis 44 gelegenen einzelnen prozentualen Gangstufenschritte werden in der angegebenen Betrachtungsrichtung größer.

Die drei axial unmittelbar aufeinanderfolgenden größten Ritzel 42, 40 und 38 bilden eine dritte Gruppe von Ritzeln, die bei Betrachtung in axialer Richtung vom kleinsten Ritzel 52 zum größten Ritzel 38 hin degressiv größer werden. Wiederum werden die zwischen den Ritzeln 42 bis 38 gelegenen einzelnen prozentualen Gangstufenschritte in der angegebenen Betrachtungsrichtung kleiner.

Das Ritzel 48 gehört als Randritzel sowohl zur ersten wie auch zur zweiten Gruppe.

Für die Ritzel 48 bis 38 gilt die für ein präzises Schalten der Fahrradkette 30 von einem Ritzel der Ritzel 48 bis 38 auf ein axial unmittelbar benachbartes Ritzel der Ritzel 48 bis 38 besonders vorteilhafte Bedingung, dass die Zähnezahlen eines jeden von zwei axial unmittelbar benachbarten Ritzeln durch die Differenz ihrer Zähnezahlen ohne Rest teilbar ist.

Die Ritzelanordnung 26 ist von einem Antreiber 66 axial durchsetzt. Mit diesem Antreiber 66 ist die Ritzelanordnung 26 mit der in den Figuren 2 und 3 nicht dargestellten Hinterradachse des Hinterrads 14 in Antriebsrichtung zur Drehmomentübertragung und gegen die Antriebsrichtung durch einen Freilauf verbunden.

Das bevorzugt ebene größte Ritzel 38 weist an seinem der Ritzelachse A nächstgelegenen Rand eine Öffnung 68 auf, welche ebenfalls vom Antreiber 66 durchsetzt ist. Zwischen dem größten Ritzel 38 und dem Antreiber 66 besteht keine unmittelbare Drehmomentübertragungsverbindung. Diese wird vielmehr erst durch ein Adapterelement 70 hergestellt, welches einerseits Drehmoment übertragend mit dem größten Ritzel 38 und andererseits Drehmoment übertragend mit dem Antreiber 66 verbunden ist.

Das Adapterelement 70 ist auf der von den übrigen Ritzeln 40 bis 52 weg weisenden Rückseite 38b des größten Ritzels 38 vorgesehen. Diese ungewöhnliche Anordnung des Adapterelements 70 ist zum einen möglich durch die Ritzelanzahl von insgesamt nur acht Ritzeln der Ritzelanordnung 26 und ist zum anderen möglich durch den verhältnismäßig geringen Abstand der Frontflächen 38a, 40a, 42a, ..., 50a und 52a, der im vorliegenden Beispiel zwischen 4,2 und 4,4 mm beträgt, im Detail genau 4,35 mm beträgt.

Durch die Ritzelanzahl von kleiner gleich neun, im dargestellten Beispiel genau acht, bei gleichzeitig geringem Frontflächenabstand benötigt die Ritzelanordnung 26 so wenig axialen Bauraum, dass das Adapterelement 70 außerhalb des von der Ritzelanordnung 26 axial beanspruchten Bauraums angeordnet werden kann. Hierdurch kann die Ritzelanordnung 26, insbesondere das durch Kettenschräglauf besonders belastete größte Ritzel 38, axial weiter von der Längsmittenebene des Fahrrads 10 entfernt angeordnet werden, sodass der Schräglaufwinkel der Fahrradkette 30 relativ zur Längsmittenebene des Fahrrads 10 dann, wenn diese über das größte Ritzel 38 läuft, kleiner ist als dann, wenn das Adapterelement 70 auf der Seite der Frontfläche 38a des größten Ritzels 38 angeordnet wäre. Die Belastung des größten Ritzels 38, das aufgrund seines erheblichen Durchmessers eine erhöhte Knickneigung zeigt, kann dadurch im Betrieb erheblich reduziert werden.

Zur axialen Abstützung des größten Ritzels 38 in der Nähe des Antreibers 66 ist vorteilhafterweise eine Abstandshülse 72 angeordnet, welche den axialen Abstand des größten Ritzels 38 von dem kleinsten Ritzel 46 des Ritzeldoms 54 definiert.

Für ein besseres Verständnis wird die Erfindung anhand der folgenden Ausführungsbeispiele weiter erläutert. Die Erfindung ist in den Ansprüchen und nicht den Beispielen definiert.

### Beispiel

1. Hinterrad-Ritzelanordnung (26) für ein Fahrrad (10), umfassend wenigstens sieben koaxial angeordnete Ritzel (38, 40, 42, 44, 46, 48 50, 52) mit unterschiedlichen Zähnezahlen, wobei der gesamte Gangbereich der Ritzelanordnung (26) - definiert als das Verhältnis der Zähnezahl des größten Ritzels (38) zur Zähnezahl des kleinsten Ritzels (52) - wenigstens 350 %, vorzugsweise wenigstens 400 %, besonders bevorzugt wenigstens 435 % beträgt, und wobei der durchschnittliche prozentuale Gangstufenschritt - berechnet als die Gesamtsumme der einzelnen prozentualen Gangstufenschritte geteilt durch die Anzahl an Gangstufenschritten, wobei wiederum ein einzelner prozentualer Gangstufenschritt definiert ist als Differenz der Zähnezahlen von zwei axial unmittelbar benachbarten Ritzeln (38, 40, 42, 44, 46, 48 50, 52) geteilt durch die Zähnezahl des kleineren der benachbarten Ritzel (38, 40, 42, 44, 46, 48 50, 52) - in einem Bereich von 15 bis 30 %, vorzugsweise in einem Bereich von 20 bis 30 % liegt.

### Beispiel

2. Hinterrad-Ritzelanordnung (26) nach Beispiel 1, wobei die Werte der einzelnen prozentualen Gangstufenschritte in einem Bereich von 15 bis 35 % liegen.

### Beispiel

3. Hinterrad-Ritzelanordnung (26) nach Beispiel 1 oder 2, wobei sie - bei Betrachtung in einer axialen Richtung vom kleinsten Ritzel (52) zum größten Ritzel (38) hin - eine Gruppe progressiv größer werdender axial aufeinanderfolgender Ritzel (48, 46, 44) umfasst, zwischen welchen die Werte der einzelnen prozentualen Gangstufenschritte von einer Gangstufe zur nächsten zunehmen, und wobei sie eine Gruppe degressiv größer werdender axial aufeinanderfolgender Ritzel (52, 50, 48 und 42, 40, 38) umfasst, zwischen welchen die Werte der einzelnen prozentualen Gangstufenschritte von einer Gangstufe zur nächsten abnehmen.

### Beispiel

4. Hinterrad-Ritzelanordnung (26) nach Beispiel 3, wobei die Gruppe progressiv größer werdender axial aufeinanderfolgender Ritzel (48, 46, 44) axial zwischen zwei Gruppen von degressiv größer werdenden axial aufeinanderfolgenden Ritzeln (52, 50, 48 und 42, 40, 38) gelegen ist.

### Beispiel

5. Hinterrad-Ritzelanordnung (26) nach einem der vorhergehenden Beispiele, wobei der größte einzelne prozentuale Gangstufenschritt zwischen dem drittgrößten (42) und dem viertgrößten Ritzel (44) oder/und zwischen dem viertgrößten (44) und dem fünftgrößten Ritzel (46) auftritt.

### Beispiel

6. Hinterrad-Ritzelanordnung (26) nach einem der vorhergehenden Beispiele, wobei das größte Ritzel (38) wenigstens 44, vorzugsweise wenigstens 48 Zähne hat.

### Beispiel

7. Hinterrad-Ritzelanordnung (26) nach einem der vorhergehenden Beispiele, wobei das kleinste Ritzel (52) wenigstens 10, vorzugsweise wenigstens 11, und nicht mehr als 13 Zähne hat.

### Beispiel

8. Hinterrad-Ritzelanordnung (26) nach einem der vorhergehenden Beispiele, wobei die Zähnezahl eines jeden der vier größten Ritzel (38, 40, 42, 44) ein ganzzahliges Vielfaches von 4 ist, vorzugsweise ein ganzzahliges Vielfaches von 8 ist.

### Beispiel

9. Hinterrad-Ritzelanordnung (26) nach einem der vorhergehenden Beispiele, wobei die Zähnezahl eines jeden von drei Ritzeln (44, 46, 48) aus einer Gruppe von vier axial aufeinanderfolgenden Ritzeln (44, 46, 48, 50), umfassend die Ritzel vom viertgrößten (44) bis zum siebtgrößten Ritzel (50), ein ganzzahliges Vielfaches von 3, vorzugsweise ein ganzzahliges Vielfaches von 6 ist.

### Beispiel

10. Hinterrad-Ritzelanordnung (26) nach einem der vorhergehenden Beispiele, wobei das größte Ritzel (38) eben ist.

### Beispiel

11. Hinterrad-Ritzelanordnung (26) nach einem der vorhergehenden Beispiele, wobei das größte Ritzel (38) eine zentrale Öffnung (68) aufweist, welche von einem Antreiber (66) durchsetzt ist, wobei zwischen dem größten Ritzel (38) und dem Antreiber (66) kein unmittelbarer Formschlusseingriff zur Drehmomentübertragung vom größten Ritzel (38) auf das Antreiber (66) besteht.

### Beispiel

12. Hinterrad-Ritzelanordnung (26) nach einem der vorhergehenden Beispiele, wobei das größte Ritzel (38) mit einem Antreiber (66) zur Drehmomentübertragung durch ein Adapterelement (70) gekoppelt ist, wobei das Adapterelement (70) auf jener Seite (38a) des größten Ritzels (38) gelegen ist, vorzugsweise vollständig gelegen ist, welche von den übrigen Ritzeln (40, 42, 44, 46, 48 50, 52) weg weist.

### Beispiel

13. Hinterrad-Ritzelanordnung (26) nach einem der vorhergehenden Beispiele, wobei wenigstens drei, vorzugsweise wenigstens vier, besonders bevorzugt genau vier Ritzel (40, 42, 44, 46) als ein einstückiges Ritzelbauteil (54) innerhalb der Hinterrad-Ritzelanordnung (26) ausgebildet sind.

### Beispiel

14. Hinterrad-Ritzelanordnung (26) nach Beispiel 13, wobei das größte Ritzel (38) und das kleinste Ritzel (52) jeweils gesondert als Einzelritzel ausgebildet sind.

### Beispiel

15. Hinterrad-Ritzelanordnung (26) nach den Ansprüchen 13 und 14, wobei das einstückige Ritzelbauteil (54) das zweitgrößte Ritzel (40) enthält.

### Beispiel

16. Hinterrad-Ritzelanordnung (26) nach einem der vorhergehenden Beispiele, wobei sie genau sieben oder genau acht oder genau neun Ritzel (38, 40, 42, 44, 46, 48 50, 52) aufweist.

### Beispiel

17. Hinterrad-Ritzelanordnung (26) nach einem der vorhergehenden Beispiele, wobei ein Frontflächenabstand zwischen axial unmittelbar aufeinanderfolgenden Ritzeln (38, 40, 42, 44, 46, 48 50, 52) zwischen 4,2 und 4,4 mm beträgt, vorzugsweise zwischen 4,3 und 4,4 mm, besonders bevorzugt 4,35 mm beträgt.

### Beispiel

18. Antriebsbaugruppe (22) für ein Fahrrad (10), umfassend eine Hinterrad-Ritzelanordnung (26) nach einem der Beispiele 1 bis 17 sowie ein, vorzugsweise genau ein vorderes Kettenblatt (24), wobei die Zähnezahl des vorderen Kettenblatts (24) kleiner ist als die Zähnezahl des größten Ritzels (38) und größer ist als die Zähnezahl des drittgrößten Ritzels (42).

### Beispiel

19. Antriebsbaugruppe (22) für ein Fahrrad (10) nach Beispiel 18, wobei das Kettenblatt (24) und das zweitgrößte Ritzel (40) die gleiche Zähnezahl aufweisen.

### Beispiel

20. Antriebsbaugruppe (22) für ein Fahrrad (10) nach Beispiel 18 oder 19, wobei die Antriebsbaugruppe (22) ferner einen unterstützenden Elektromotor (32) aufweist, welcher dazu ausgebildet oder/und angeordnet ist, sein Unterstützungsdrehmoment zum Hinterrad (14) über die Hinterrad-Ritzelanordnung (26) zu übertragen, wobei der unterstützende Elektromotor (32) bevorzugt mit dem Kettenblatt (24) zur Drehmomentübertragung gekoppelt oder koppelbar ist.

### Beispiel

21. Fahrrad (10) mit einer Hinterrad-Ritzelanordnung (26) nach einem der Beispiele 1 bis 17 oder/und mit einer Antriebsbaugruppe (22) nach einem der Beispiele 18 bis 20.

## Patentansprüche

1. Hinterrad-Ritzelanordnung (26) für ein Fahrrad (10), umfassend wenigstens sieben koaxial angeordnete Ritzel (38, 40, 42, 44, 46, 48 50, 52) mit unterschiedlichen Zähnezahlen, wobei der gesamte Gangbereich der Ritzelanordnung (26) - definiert als das Verhältnis der Zähnezahl des größten Ritzels (38) zur Zähnezahl des kleinsten Ritzels (52) - wenigstens 350 %, vorzugsweise wenigstens 400 %, besonders bevorzugt wenigstens 435 % beträgt, und **gekennzeichnet dadurch, dass** der durchschnittliche prozentuale Gangstufenschritt - berechnet als die Gesamtsumme der einzelnen prozentualen Gangstufenschritte geteilt durch die Anzahl an Gangstufenschritten, wobei wiederum ein einzelner prozentualer Gangstufenschritt definiert ist als Differenz der Zähnezahlen von zwei axial unmittelbar benachbarten Ritzeln (38, 40, 42, 44, 46, 48 50, 52) geteilt durch die Zähnezahl des kleineren der benachbarten Ritzel (38, 40, 42, 44, 46, 48 50, 52) - in einem Bereich von 20 bis 30 % liegt.

2. Hinterrad-Ritzelanordnung (26) nach Anspruch 1,
**dadurch gekennzeichnet,**
**dass** die Werte der einzelnen prozentualen Gangstufenschritte in einem Bereich von 15 bis 35 % liegen.

3. Hinterrad-Ritzelanordnung (26) nach Anspruch 1 oder 2,
**dadurch gekennzeichnet,**
**dass** sie - bei Betrachtung in einer axialen Richtung vom kleinsten Ritzel (52) zum größten Ritzel (38) hin - eine Gruppe progressiv größer werdender axial aufeinanderfolgender Ritzel (48, 46, 44) umfasst, zwischen welchen die Werte der einzelnen prozentualen Gangstufenschritte von einer Gangstufe zur nächsten zunehmen, und wobei sie eine Gruppe degressiv größer werdender axial aufeinanderfolgender Ritzel (52, 50, 48 und 42, 40, 38) umfasst, zwischen welchen die Werte der einzelnen prozentualen Gangstufenschritte von einer Gangstufe zur nächsten abnehmen.

4. Hinterrad-Ritzelanordnung (26) nach Anspruch 3,
**dadurch gekennzeichnet,**
**dass** die Gruppe progressiv größer werdender axial aufeinanderfolgender Ritzel (48, 46, 44) axial zwischen zwei Gruppen von degressiv größer werdenden axial aufeinanderfolgenden Ritzeln (52, 50, 48 und 42, 40, 38) gelegen ist.

5. Hinterrad-Ritzelanordnung (26) nach einem der vorhergehenden Ansprüche,
**dadurch gekennzeichnet,**
**dass** der größte einzelne prozentuale Gangstufenschritt zwischen dem drittgrößten (42) und dem viertgrößten Ritzel (44) oder/und zwischen dem viertgrößten (44) und dem fünftgrößten Ritzel (46) auftritt.

6. Hinterrad-Ritzelanordnung (26) nach einem der vorhergehenden Ansprüche,
**dadurch gekennzeichnet,**
**dass** das größte Ritzel (38) eine zentrale Öffnung (68) aufweist, welche von einem Antreiber (66) durchsetzt ist, wobei zwischen dem größten Ritzel (38) und dem Antreiber (66) kein unmittelbarer Formschlusseingriff zur Drehmomentübertragung vom größten Ritzel (38) auf das Antreiber (66) besteht.

7. Hinterrad-Ritzelanordnung (26) nach einem der vorhergehenden Ansprüche,
**dadurch gekennzeichnet,**
**dass** das größte Ritzel (38) mit einem Antreiber (66) zur Drehmomentübertragung durch ein Adapterelement (70) gekoppelt ist, wobei das Adapterelement (70) auf jener Seite (38a) des größten Ritzels (38) gelegen ist, vorzugsweise vollständig gelegen ist, welche von den übrigen Ritzeln (40, 42, 44, 46, 48 50, 52) weg weist.

8. Hinterrad-Ritzelanordnung (26) nach einem der vorhergehenden Ansprüche,
**dadurch gekennzeichnet,**
**dass** wenigstens drei, vorzugsweise wenigstens vier, besonders bevorzugt genau vier Ritzel (40, 42, 44, 46) als ein einstückiges Ritzelbauteil (54) innerhalb der Hinterrad-Ritzelanordnung (26) ausgebildet sind.

9. Hinterrad-Ritzelanordnung (26) nach Anspruch 8,
**dadurch gekennzeichnet,**
**dass** das größte Ritzel (38) und das kleinste Ritzel (52) jeweils gesondert als Einzelritzel ausgebildet sind.

10. Hinterrad-Ritzelanordnung (26) nach einem der vorhergehenden Ansprüche,
**dadurch gekennzeichnet,**
**dass** sie genau sieben oder genau acht oder genau neun Ritzel (38, 40, 42, 44, 46, 48 50, 52) aufweist.

11. Hinterrad-Ritzelanordnung (26) nach einem der vorhergehenden Ansprüche,
**dadurch gekennzeichnet,**
**dass** ein Frontflächenabstand zwischen axial unmittelbar aufeinanderfolgenden Ritzeln (38, 40, 42, 44, 46, 48 50, 52) zwischen 4,2 und 4,4 mm beträgt, vorzugsweise zwischen 4,3 und 4,4 mm, besonders bevorzugt 4,35 mm beträgt.

12. Antriebsbaugruppe (22) für ein Fahrrad (10), umfassend eine Hinterrad-Ritzelanordnung (26) nach einem der Ansprüche 1 bis 11 sowie ein, vorzugsweise genau ein vorderes Kettenblatt (24), wobei die Zähnezahl des vorderen Kettenblatts (24) kleiner ist als die Zähnezahl des größten Ritzels (38) und größer ist als die Zähnezahl des drittgrößten Ritzels (42).

13. Antriebsbaugruppe (22) für ein Fahrrad (10) nach Anspruch 12,
**dadurch gekennzeichnet,**
**dass** das Kettenblatt (24) und das zweitgrößte Ritzel (40) die gleiche Zähnezahl aufweisen.

14. Antriebsbaugruppe (22) für ein Fahrrad (10) nach Anspruch 12 oder 13,
**dadurch gekennzeichnet,**
**dass** die Antriebsbaugruppe (22) ferner einen unterstützenden Elektromotor (32) aufweist, welcher dazu ausgebildet oder/und angeordnet ist, sein Unterstützungsdrehmoment zum Hinterrad (14) über die Hinterrad-Ritzelanordnung (26) zu übertragen, wobei der unterstützende Elektromotor (32) bevorzugt mit dem Kettenblatt (24) zur Drehmomentübertragung gekoppelt oder koppelbar ist.

15. Fahrrad (10) mit einer Hinterrad-Ritzelanordnung (26) nach einem der Ansprüche 1 bis 11 oder/und mit einer Antriebsbaugruppe (22) nach einem der Ansprüche 12 bis 14.

## Claims

1. Rear-wheel pinion arrangement (26) for a bicycle (10), comprising at least seven coaxially arranged pinions (38, 40, 42, 44, 46, 48, 50, 52) having different numbers of teeth, wherein the entire gear range of the pinion arrangement (26) - defined as the ratio of the number of teeth of the largest pinion (38) to the number of teeth of the smallest pinion (52) - is at least 350%, preferably at least 400%, particularly preferably at least 435%, and **characterized in that** the average percentage gear stage step - calculated as the total sum of the individual percentage gear stage steps divided by the number of gear stage steps, wherein, in turn, an individual percentage gear stage step is defined as the difference in the number of teeth of two axially directly adjacent pinions (38, 40, 42, 44, 46, 48, 50, 52) divided by the number of teeth of the smaller of the adjacent pinions (38, 40, 42, 44, 46, 48, 50, 52) - lies within a range of 20 to 30%.

2. Rear-wheel pinion arrangement (26) according to Claim 1,
**characterized in that** the values of the individual percentage gear stage steps lie within a range of 15 to 35%.

3. Rear-wheel pinion arrangement (26) according to Claim 1 or 2,
**characterized in that** it comprises - when viewing in an axial direction from the smallest pinion (52) towards the largest pinion (38) - a group of axially successive pinions (48, 46, 44) which become progressively larger and between which the values of the individual percentage gear stage steps increase from one gear stage to the next, and wherein it comprises a group of axially successive pinions (52, 50, 48 and 42, 40, 38) which become degressively larger and between which the values of the individual percentage gear stage steps decrease from one gear stage to the next.

4. Rear-wheel pinion arrangement (26) according to Claim 3,
**characterized in that** the group of axially successive pinions (48, 46, 44) which become progressively larger is placed axially between two groups of axially successive pinions (52, 50, 48 and 42, 40, 38) which become degressively larger.

5. Rear-wheel pinion arrangement (26) according to one of the preceding claims,
**characterized in that** the largest individual percentage gear stage step occurs between the third largest pinion (42) and the fourth largest pinion (44) or/and between the fourth largest pinion (44) and the fifth largest pinion (46).

6. Rear-wheel pinion arrangement (26) according to one of the preceding claims,
**characterized in that** the largest pinion (38) has a central opening (68) through which a driver (66) passes, wherein there is no direct form-fitting engagement between the largest pinion (38) and the driver (66) for transmitting torque from the largest pinion (38) to the driver (66).

7. Rear-wheel pinion arrangement (26) according to one of the preceding claims,
**characterized in that** the largest pinion (38) is coupled to a driver (66) by an adapter element (70) for the transmission of torque, wherein the adapter element (70) is placed, preferably is entirely placed, on that side (38a) of the largest pinion (38) which faces away from the rest of the pinions (40, 42, 44, 46, 48, 50, 52) .

8. Rear-wheel pinion arrangement (26) according to one of the preceding claims,
**characterized in that** at least three, preferably at least four, particularly preferably precisely four pinions (40, 42, 44, 46) are designed as a single-piece pinion component (54) within the rear-wheel pinion arrangement (26).

9. Rear-wheel pinion arrangement (26) according to Claim 8,
**characterized in that** the largest pinion (38) and the smallest pinion (52) are each formed separately as individual pinions.

10. Rear-wheel pinion arrangement (26) according to one of the preceding claims,
**characterized in that** it has precisely seven or precisely eight or precisely nine pinions (38, 40, 42, 44, 46, 48, 50, 52).

11. Rear-wheel pinion arrangement (26) according to one of the preceding claims,
**characterized in that** a front face distance between axially directly successive pinions (38, 40, 42, 44, 46, 48, 50, 52) is between 4.2 and 4.4 mm, preferably between 4.3 and 4.4 mm, particularly preferably 4.35 mm.

12. Drive assembly (22) for a bicycle (10), comprising a rear-wheel pinion arrangement (26) according to one of Claims 1 to 11, and a front sprocket wheel, preferably precisely one front sprocket wheel (24), wherein the number of teeth of the front sprocket wheel (24) is smaller than the number of teeth of the largest pinion (38) and larger than the number of teeth of the third largest pinion (42).

13. Drive assembly (22) for a bicycle (10) according to Claim 12,
**characterized in that** the sprocket wheel (24) and the second largest pinion (40) have the same number of teeth.

14. Drive assembly (22) for a bicycle (10) according to Claim 12 or 13,
**characterized in that** the drive assembly (22) furthermore has an assisting electric motor (32) which is designed or/and is arranged to transmit its assisting torque to the rear wheel (14) via the rear-wheel pinion arrangement (26), wherein the assisting electric motor (32) is preferably coupled or couplable to the sprocket wheel (24) in order to transmit torque.

15. Bicycle (10) with a rear-wheel pinion arrangement (26) according to one of Claims 1 to 11 or/and with a drive assembly (22) according to one of Claims 12 to 14.

## Revendications

1. Système de pignons de roue arrière (26) pour un vélo (10), comprenant au moins sept pignons (38, 40, 42, 44, 46, 48, 50, 52) disposés coaxialement avec des nombres de dents différents, la gamme de vitesses complète du système de pignons (26) - définie comme le rapport du nombre de dents du plus grand pignon (38) au nombre de dents du plus petit pignon (52) - étant d'au moins 350 %, de préférence d'au moins 400 %, particulièrement préférablement d'au moins 435 %, et
**caractérisé en ce que**
le pas de rapport de vitesse moyen en pourcentage - calculé comme étant la somme totale des pas de rapports de vitesse individuels en pourcentage divisée par le nombre de pas de rapports de vitesse, où un pas de rapport de vitesse individuel en pourcentage est à nouveau défini comme la différence entre les nombres de dents de deux pignons immédiatement adjacents axialement (38, 40, 42, 44, 46, 48, 50, 52) divisée par le nombre de dents du plus petit des pignons adjacents (38, 40, 42, 44, 46, 48, 50, 52) - est situé dans une plage de 20 à 30 %.

2. Système de pignons de roue arrière (26) selon la revendication 1,
**caractérisé en ce que**
les valeurs des pas de rapports de vitesse individuels en pourcentage sont situées dans une plage de 15 à 35 %.

3. Système de pignons de roue arrière (26) selon la revendication 1 ou 2,
**caractérisé en ce que**
le système de pignons de roue arrière - considéré dans une direction axiale depuis le plus petit pignon (52) vers le plus grand pignon (38) - comprend un groupe de pignons axialement successifs (48, 46, 44) devenant de plus en plus grands de manière progressive, entre lesquels les valeurs des pas de rapports de vitesse individuels en pourcentage augmentent d'un étage de vitesse au suivant, et où le système comprend un groupe de pignons axialement successifs devenant de plus en plus grand de manière dégressive (52, 50, 48 et 42, 40, 38), entre lesquels les valeurs des pas de rapports de vitesse individuels en pourcentage diminuent d'un rapport de vitesse au suivant.

4. Système de pignons de roue arrière (26) selon la revendication 3,
**caractérisé en ce que**
le groupe de pignons axialement successifs devenant de plus en plus grands de manière progressive (48, 46, 44) est placé axialement entre deux groupes de pignons axialement successifs devenant de plus en plus grands de manière dégressive (52, 50, 48 et 42, 40, 38).

5. Système de pignons de roue arrière (26) selon l'une quelconque des revendications précédentes,
**caractérisé en ce que**
le plus grand pas de rapport de vitesse individuel en pourcentage se produit entre le troisième plus grand pignon (42) et le quatrième plus grand pignon (44) et/ou entre le quatrième plus grand pignon (44) et le cinquième plus grand pignon (46) .

6. Système de pignons de roue arrière (26) selon l'une quelconque des revendications précédentes,
**caractérisé en ce que**
le plus grand pignon (38) présente une ouverture centrale (68) qui est traversée par un élément d'entraînement (66), aucun engagement par correspondance de formes direct n'existant entre le plus grand pignon (38) et l'élément d'entraînement (66) pour le transfert de couple du plus grand pignon (38) à l'élément d'entraînement (66) .

7. Système de pignons de roue arrière (26) selon l'une quelconque des revendications précédentes,
**caractérisé en ce que**
le plus grand pignon (38) est accouplé à un élément d'entraînement (66) pour le transfert de couple par un élément adaptateur (70), l'élément adaptateur (70) étant placé, de préférence étant placé complètement, du côté (38a) du plus grand pignon (38) qui est opposé au reste des pignons (40, 42, 44, 46, 48, 50, 52) .

8. Système de pignons de roue arrière (26) selon l'une quelconque des revendications précédentes,
**caractérisé en ce**
**qu'**au moins trois, de préférence au moins quatre, particulièrement préférablement exactement quatre pignons (40, 42, 44, 46) sont réalisés sous la forme d'un composant de pignon d'une seule pièce (54) à l'intérieur de l'agencement de pignons de roue arrière (26).

9. Système de pignons de roue arrière (26) selon la revendication 8,
**caractérisé en ce que**
le plus grand pignon (38) et le plus petit pignon (52) sont réalisés à chaque fois séparément sous forme de pignons individuels.

10. Agencement de pignons de roue arrière (26) selon l'une quelconque des revendications précédentes,
**caractérisé en ce**
**qu'**il présente exactement sept ou exactement huit ou exactement neuf pignons (38, 40, 42, 44, 46, 48, 50, 52).

11. Système de pignons de roue arrière (26) selon l'une quelconque des revendications précédentes,
**caractérisé en ce**
**qu'**une distance de la surface avant entre des pignons directement axialement successifs (38, 40, 42, 44, 46, 48, 50, 52) est comprise entre 4,2 et 4,4 mm, de préférence entre 4,3 et 4,4 mm, particulièrement préférablement vaut 4,35 mm.

12. Module d'entraînement (22) pour un vélo (10), comprenant un système de pignons de roue arrière (26) selon l'une quelconque des revendications 1 à 11, ainsi qu'un plateau avant, de préférence exactement un plateau avant (24), le nombre de dents du plateau avant (24) étant inférieur au nombre de dents du plus grand pignon (38) et étant supérieur au nombre de dents du troisième plus grand pignon (42).

13. Module d'entraînement (22) pour un vélo (10) selon la revendication 12,
**caractérisé en ce que** le plateau (24) et le deuxième plus grand pignon (40) présentent le même nombre de dents.

14. Module d'entraînement (22) pour un vélo (10) selon la revendication 12 ou 13,
**caractérisé en ce que**
le module d'entraînement (22) présente en outre un moteur électrique d'assistance (32) qui est réalisé et/ou disposé de manière à transmettre son couple d'assistance à la roue arrière (14) par le biais du système de pignons de roue arrière (26), le moteur électrique d'assistance (32) étant ou pouvant de préférence être accouplé au plateau (24) en vue du transfert de couple.

15. Vélo (10) comprenant un système de pignons de roue arrière (26) selon l'une quelconque des revendications 1 à 11 et/ou un module d'entraînement (22) selon l'une quelconque des revendications 12 à 14.
